# EUROPÄISCHE PATENTSCHRIFT

(11) **EP 2 640 548 B1**
(45) Veröffentlichungstag und Bekanntmachung des Hinweises auf die Patenterteilung: **15.10.2014**
(21) Anmeldenummer: 11775782.3
(22) Anmeldetag: 26.10.2011
(51) Int. Cl.: B23K 26/00, B23K 26/08, B23K 26/12, B41J 2/44, B41J 3/407, B41J 11/06

(54) **VORRICHTUNG ZUR BESCHRIFTUNG VON KENNZEICHNUNGSSCHILDERN**
APPARATUS FOR PRINTING OF LABELS
APPAREILLE POUR IMPRIMER DES PLAQUES D'IDENTIFICATION

(30) Priorität: 18.11.2010 DE 102010051539
(43) Veröffentlichungstag der Anmeldung: 25.09.2013
(73) Patentinhaber: Murrplastik Systemtechnik GmbH, 71570 Oppenweiler (DE)
(72) Erfinder: BIER, Klaus-Dieter, 71397 Leutenbach (DE); SCHMID, Jürgen, 73666 Baltmannsweiler (DE); DAUB, Heiko, 75031 Kleingartach (DE); DUBOVIK, Ivan, 71642 Ludwigsburg (DE)
(74) Vertreter: Reule, Hanspeter
(86) Internationale Anmeldenummer: PCT/EP2011/068710
(87) Internationale Veröffentlichungsnummer: WO 2012/065816

(56) Entgegenhaltungen:
- EP-A2- 1 589 278
- DE-A1- 3 108 404
- DE-A1-102005 058 387
- DE-U1- 20 021 910
- US-A- 5 518 325
- US-A1- 2007 264 073

## Beschreibung

Die Erfindung betrifft eine Vorrichtung zur Beschriftung von Kennzeichnungsschildern gemäß Oberbegriff des Anspruchs 1.

Laserbeschriftungsvorrichtungen der eingangs genannten Art dienen der Beschriftung von Kennzeichnungsschildern, wie sie beispielsweise für die Markierung von elektrischen Leitungen verwendet werden. Die Kennzeichnungsschilder werden in der Regel als einstückig zusammenhängender Kennzeichnungsschildersatz auf die Auflagefläche aufgelegt, so dass sie bezüglich des Laserbeschriftungsgeräts definiert positioniert sind. Das Laserbeschriftungsgerät bringt dann die Kennzeichnung auf den Kennzeichnungsschildern an. Dabei sind jedoch strenge Schutzvorschriften einzuhalten. Besteht die Gefahr, dass Laserlicht aus dem Gehäuse ausdringt, so muß der Benutzer in den meisten Fällen aufgrund von Arbeitsschutzbestimmungen eine Schutzbrille tragen. Es wurde daher versucht, die Abdeckhaube entsprechend auszugestalten, dass kein Laserlicht austreten kann. Diese Maßnahmen führten jedoch zu einem komplizierten Aufbau der Beschriftungsvorrichtung, da nach jedem Beschriftungsvorgang die Abdeckhaube entfernt werden muß, um den beschrifteten Kennzeichnungsschildersatz entnehmen und einen unbeschrifteten Kennzeichnungsschildersatz einsetzten zu können.

Es ist daher Aufgabe der Erfindung, eine Vorrichtung der eingangs genannten Art derart weiterzubilden, dass sie einfacher zu handhaben ist.

Diese Aufgabe wird erfindungsgemäß durch eine Vorrichtung mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, dass mit dem Drehteller eine einfach zu handhabende Möglichkeit bereit gestellt wird, die Kennzeichnungsschilder außerhalb des Gehäuses auf der Auflagefläche zu platzieren und sie mit einer einfachen Handbewegung durch Drehen des Drehtellers in das Gehäuse zu befördern. Mittels der Abdichtrippen erfolgt dann eine Abdichtung des Spaltes zwischen dem Gehäuseunterteil und der Abdeckhaube, so dass ein Austreten von Lasersicht aus dem Gehäuse erschwert oder gar verhindert wird. Diese Maßnahme erlaubt es, die Beschriftungsvorrichtung in einer niedrigeren Laserschutzklasse zu betreiben, so dass ein Benutzer gegebenenfalls keine Schutzbrille tragen muß.

Zweckmäßig weisen die Abdichtrippen jeweils einen ersten Abschnitt zum Untergreifen einer Unterkante der Vorderwand der Abdeckhaube und einen sich vom ersten Abschnitt nach oben erstreckenden zweiten Abschnitt zur Anlage an der Vorderwand auf. Durch diese Maßnahme wird der Spalt doppelt abgedichtet: zum einen durch den ersten Abschnitt, der vorzugsweise eine horizontale Oberfläche aufweist, die in der Beschriftungsposition an der Unterkante der Vorderwand anliegt und somit schon allein geeignet ist, einen Austritt von Laserlicht zu verhindern. Zum anderen zusätzlich durch den zweiten Abschnitt, der in der Beschriftungsposition an der Vorderwand anliegt und das Austreten von Laserlicht selbst dann zumindest teilweise verhindert, wenn zwischen dem ersten Abschnitt und der Unterkante der Vorderwand noch ein kleiner Spalt frei bleibt. Gemäß dem bevorzugten Ausführungsbeispiel liegt in der Beschriftungsposition eine erste der Abdichtrippen an der dem Laserstrahl zugewandten Innenseite der Vorderwand an, während die zweite der Abdichtrippen mit ihrem zweiten Abschnitt an der dem Laserstrahl abgewandten Außenseite der Vorderwand anliegt. Beim Drehen des Drehtellers in die Beschriftungsposition wird somit die erste Abdichtrippe von innen, die zweite Abdichtrippe von außen an die Vorderwand angelegt.

Gemäß der bevorzugten Ausführungsform liegen die Abdichtrippen auch in der Beladeposition an der Vorderwand an, und der Drehteller weist eine weitere Auflagefläche für die Kennzeichnungsschilder auf, wobei die Abdichtrippen zwischen den beiden Auflageflächen angeordnet sind. Dabei liegt die erste Abdichtrippe auch in der Beladeposition zweckmäßig an der Innenseite der Vorderwand an, während die zweite Abdichtrippe wiederum an der Außenseite der Vorderwand anliegt. Zweckmäßig weisen die Abdichtrippen jeweils einen weiteren Abschnitt zum Untergreifen der Unterkante der Vorderwand in der Beladeposition auf, so dass die Abdichtrippen in der Beladeposition in gleicher Weise an der Vorderwand anliegen wie in der Beschriftungsposition. Durch diese Maßnahmen ist es möglich, einen auf der weiteren Auflagefläche liegenden, bereits beschrifteten Kennzeichnungsschildersatz durch einen unbeschrifteten Kennzeichnungsschildersatz zu ersetzen, während ein auf der Auflagefläche liegender Kennzeichnungsschildersatz im Gehäuse beschriftet wird. Die Beschriftungsposition des Drehtellers ist somit dadurch definiert, dass sich die Auflagefläche im Gehäuse befindet, während sich die weitere Auflagefläche außerhalb des Gehäuses befindet. Umgekehrt ist es selbstverständlich möglich, einen auf der Auflagefläche liegenden, bereits beschrifteten Kennzeichnungsschildersatz gegen einen unbeschrifteten auszutauschen, während ein auf der weiteren Auflagefläche liegender Kennzeichnungsschildersatz gerade beschriftet wird.

Die Abschnitte, die zum Untergreifen der Unterkante der Vorderwand bestimmt sind, weisen zweckmüßig jeweils eine Stufe auf, so dass ihre Höhe zum freien Ende der Abdichtrippen hin verringert ist. Dies ist insbesondere dann vorteilhaft, wenn die Abdeckhaube aus mehreren Blechen zusammengesetzt ist, die zumindest teilweise an mindestens einer ihrer Seitenkanten jeweils einen umgebogenen Seitenstreifen aufweisen, der flächig am benachbarten Blech anliegt. Durch die Stufe am freien Ende der Abdichtrippen ist es möglich, einen Seitenstreifen, der eine Verbindung zwischen der Vorderwand und der zu ihr benachbarten Seitenwand bis knapp über die Auflagefläche herunter zu führen.

Zweckmäßig verbreitern sich die zweiten Abschnitte der Abdichtrippen von der Drehachse ausgehend zu den freien Enden der Abdichtrippen hin kontinuierlich. Dadurch wird der Tatsache Rechnung getragen, dass die Vorderwand des Gehäuses eine endliche Dicke aufweist, so dass die zweiten Abschnitte nicht in einem Winkel von 180° zueinander angeordnet sein können, wenn sie in der Beschriftungsposition an der Vorderwand anliegen sollen. Die Auflagefläche bzw. die Auflageflächen ist bzw. sind bevorzugt mit einer Vertiefung versehen, deren Kontur der Kontur eines Kennzeichnungsschildersatzes entspricht. Damit ist eine definierte Positionierung des Kennzeichnungsschildersatzes auf der Auflagefläche bzw. auf der weiteren Auflagefläche möglich, so dass der Kennzeichnungsschildersatz auf einfache Weise gegenüber dem Laserbeschriftungsgerät in eine definierte Position gebracht werden kann. Typische Formen von Kennzeichnungsschildersätzen sind aus der DE 10 2005 058 387 A1 und der DE 37 25 217 C2 bekannt.

Ein Laserschneidesystem mit Abschirmung ist aus der US 5 464 963 bekannt.

Im Folgenden wird die Erfindung anhand eines in der Zeichnung schematisch dargestellten Ausführungsbeispiels näher erläutert. Es zeigen
- Fig. 1: eine Beschriftungsvorrichtung in perspektivischer Ansicht mit dem Drehteller in der Beladeposition;
- Fig. 2a, 2b: Teilansichten der Beschriftungsvorrichtung gemäß Fig. 1 mit dem Drehteller in der Beschriftungsposition;
- Fig. 3a, 3b: Teilansichten der Beschriftungsvorrichtung gemäß Fig. 1 mit dem Drehteller in der Beladeposition und

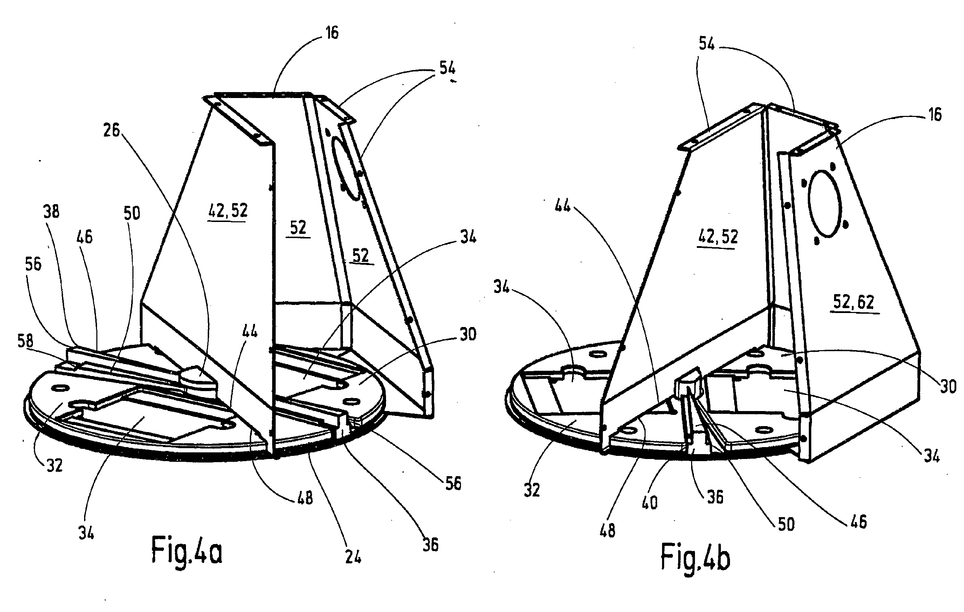

- Fig. 4a, 4b: Teilansichten der Beschriftungsvorrichtung gemäß Fig. 1 mit dem Drehteller in einer Position zwischen der Beschriftungsposition und der Beladeposition.

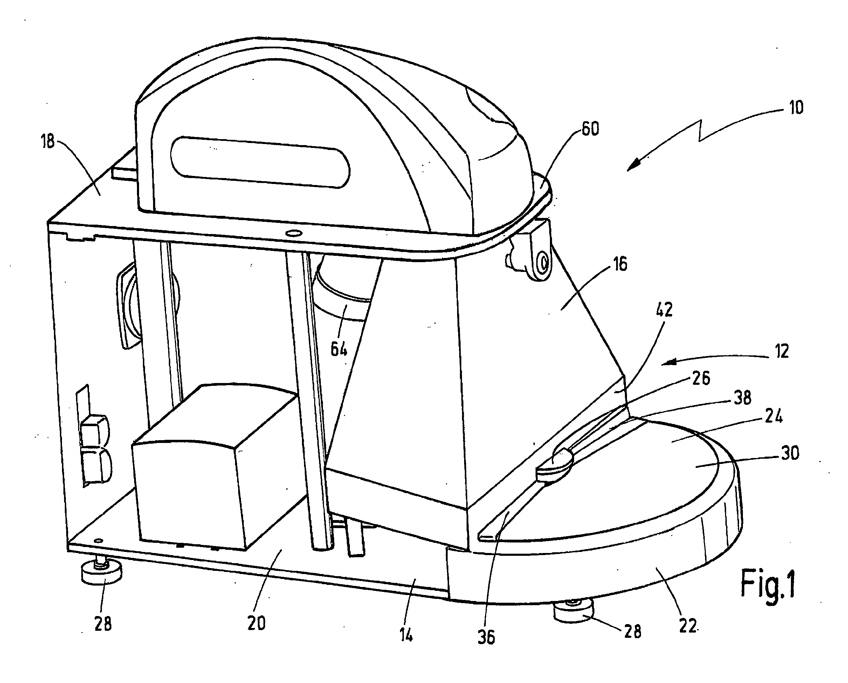

Die in Fig. 1 gezeigte Beschriftungsvorrichtung 10 für Kennzeichnungsschilder weist ein Gehäuse 12 auf, das ein Gehäuseunterteil 14, eine Abdeckhaube 16 und einen Aufbau 18 aufweist. Das Gehäuseunterteil 14 weist eine Bodenplatte 20 und ein Lager 22 auf, in dem ein Drehteller 24 um eine Drehachse 26 drehbar gelagert ist. Die Bodenplatte 20 und das Lager 22 ruhen auf Füßen 28, die das Aufstellen auf einer ebenen Fläche, wie beispielsweise einer Tischplatte, ermöglichen. Der auf dem Gehäuseunterteil 14 ruhende Aufbau 18 nimmt ein in der Zeichnung nicht näher dargestelltes Laserbeschriftungsgerät auf, dessen Laserstrahl nach unten auf den Drehteller 24 gerichtet ist. Der Laserstrahl wird rings durch die Abdeckhaube 16 eingeschlossen, die zwischen dem Aufbau 18 und dem Lager 22 angeordnet und mit diesen verbunden ist. Nach unten hin wird der Laserstrahl durch den Drehteller 24, das Lager 22 und von der Abdeckhaube 16 abgekantete Blechpartien eingeschlossen.

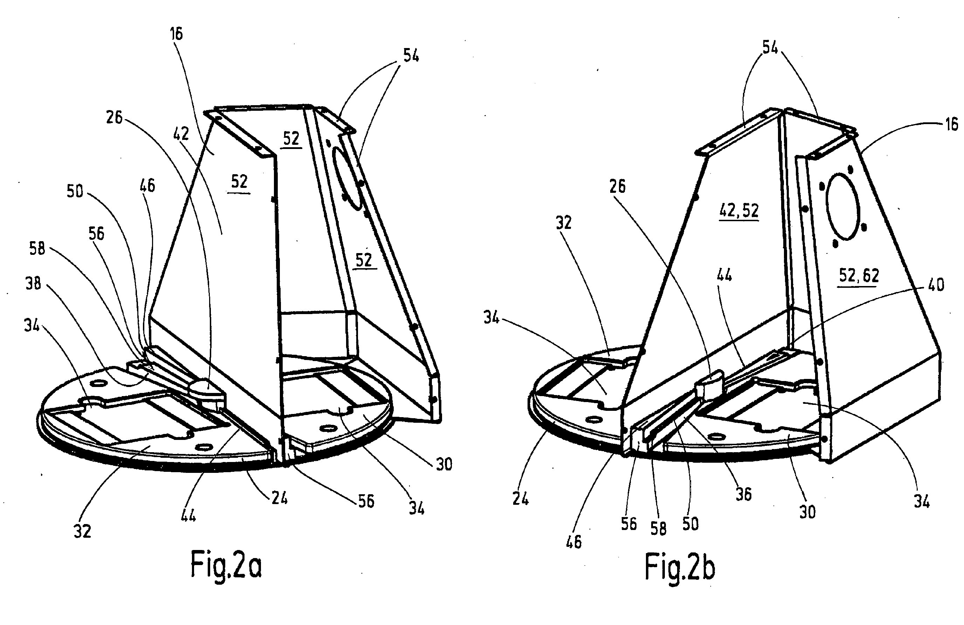

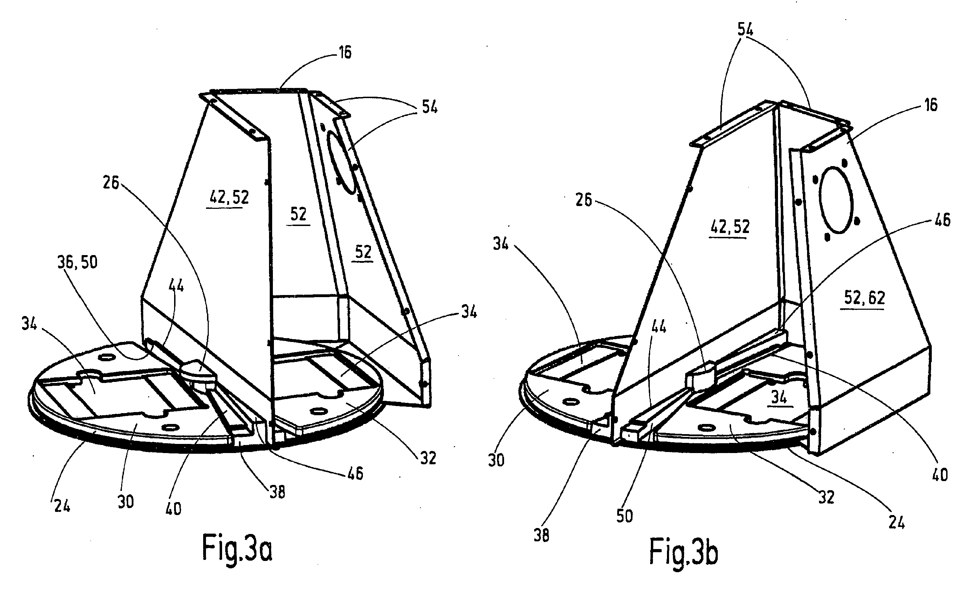

Auf dem Drehteller 24 sind zwei Auflageflächen 30, 32 angeordnet, die jeweils eine Vertiefung 34 zur Aufnahme eines Kennzeichnungsschildersatzes aufweisen. Von der Drehachse 26 aus erstrecken sich zwei Abdichtrippen 36, 38 bis zum Außenrand des Drehtellers 24, die aus den Auflageflächen 30, 32 nach oben vorstehen und die erste Auflagefläche 30 von der weiteren, zweiten Auflagefläche 32 so trennen, dass beide Auflageflächen 30, 32 gleich groß sind. Jede der Abdichtrippen weist drei Abschnitte auf. Ein erster Abschnitt 40 weist eine horizontale Oberfläche auf, die unter einer Vorderwand 42 der Abdeckhaube 16 angeordnet ist und an der Unterkante 44 der Vorderwand 42 anliegt, wenn die erste Auflagefläche 30 vollständig durch die Abdeckhaube 16 überdeckt wird. Diese Position des Drehtellers 24 (Fig. 2a, 2b) wird als Beschriftungsposition bezeichnet, während die in Fig. 1 und Fig. 3a, 3b gezeigte Position des Drehtellers 24, in der sich die erste Auflagefläche 30 vollständig außerhalb der Abdeckhaube 16 befindet, als Beladeposition bezeichnet wird, da die Vertiefung 34 in der ersten Auflagefläche 30 mit einem Kennzeichnungsschildersatz beladen werden kann.

Ein zweiter Abschnitt 46 der Abdichtrippen 36, 38 erstreckt sich vom ersten Abschnitt 40 aus vertikal nach oben. Der zweite Abschnitt 46 der ersten Abdichtrippe 36 liegt in der Beschriftungsposition flächig an der Innenfläche der vorderwand 42 an, während der zweite Abschnitt 46 der zweiten Abdichtrippe 38 in der Beschriftungsposition an der Außenseite der Vorderwand 42 anliegt. Die Abdichtrippen 36, 38 dichten somit einen Spalt 48 zwischen den Auflageflächen 30, 32 und der Abdeckhaube 16 so ab, dass durch ihn kein Laserlicht mehr ausdringen kann.

Durch eine Drehung des Drehtellers 24 um die Drehachse 26 um einen Winkel von etwas weniger als 180° wird der Drehteller 24 in die in Fig. 3a, 3b gezeigte Beladeposition gebracht, in der der zweite Abschnitt 46 der ersten Abdichtrippe 36 wieder an der Innenseite der Vorderwand 42 anliegt, während der zweite Abschnitt 46 der zweiten Abdichtrippe 38 an der Außenseite der Vorderwand 42 anliegt. Die Unterkante 44 der Vorderwand 42 wird durch einen weiteren, dritten Abschnitt 50 der Abdichtrippen 36, 38 untergriffen, der entsprechend dem ersten Abschnitt 40 gestaltet ist und in der Beladeposition mit einer Oberfläche an der Unterkante 44 der Vorderwand 42 anliegt. Somit ist es möglich, in der Beladeposition einen Kennzeichnungsschildersatz zu beschriften, der in der Vertiefung 34 der zweiten Auflagefläche 32 aufgenommen ist, und bei dessen Beschriftung dieselbe Abdichtung des Spaltes 48 zu erzielen wie in der Beschriftungsposition. Die Zeit, in der ein auf der ersten Auflagefläche 30 liegender Kennzeichnungsschildersatz beschriftet wird, kann somit genutzt werden, um einen auf der zweiten Auflagefläche 32 liegenden Kennzeichnungsschildersatz auszutauschen und umgekehrt. Somit untergreifen in der Beschriftungsposition die ersten Abschnitte 40 die Vorderwand 42, in der Beladeposition untergreifen die dritten Abschnitte 50 die Vorderwand 42.

Die Abdeckhaube 16 ist aus mehreren Blechen 52 zusammengesetzt, wobei die Bleche 52 an ihren Kanten teilweise mit abgekanteten Seitenstreifen 54 versehen sind. Die Seitenstreifen 54 liegen flächig am jeweils benachbarten Blech 52 an, so dass die Gefahr, dass Laserlicht durch eine Ritze dringt, minimiert wird. Im Bereich des Drehtellers 24 enden die Seitenstreifen 54 knapp oberhalb der Auflageflächen 30, 32. Der erste und der dritte Abschnitt 40, 50 der Abdichtrippen 36, 38 weisen zu deren freien Enden 56 hin jeweils eine Stufe 58 auf, so dass ihre Höhe dort verringert ist. Die Seitenstreifen 54 können somit im Bereich des Drehtellers 24 bis knapp über die Auflageflächen 30, 32 herunter geführt werden. Die erste Abdichtrippe 36 ist schmaler ausgeführt als die zweite Abdichtrippe 38 und beide Abdichtrippen 36, 38 werden von der Drehachse 26 zu ihren freien Enden hin breiter.

Die Abdeckhaube 16 ist nach oben hin durch eine Deckenplatte 60 des Aufbaus 18 verschlossen, durch die der Laserstrahl hindurch tritt oder durch die das Laserbeschriftungsgerät hindurch ragt. An einer Rückwand 62 der Abdeckhaube 16 ist zudem ein Anschluß 64 zum Absaugen von beim Beschriftungsvorgang entstehenden Gasen und Partikeln angeordnet.

Zusammenfassend ist folgendes festzuhalten:
Die Erfindung betrifft eine Vorrichtung 10 zur Beschriftung von Kennzeichnungsschildern mit einer Auflagefläche 30 für die Kennzeichnungsschilder, mit einem Laserbeschriftungsgerät und mit einem Gehäuse 12 zum Einschließen eines aus dem Laserbeschriftungsgerät austretenden, auf die Auflagefläche 30 gerichteten Laserstrahls, wobei das Gehäuse 12 ein Gehäuseunterteil 14 und eine auf oder über dem Gehäuseunterteil 14 angeordnete Abdeckhaube 16 aufweist. Erfindungsgemäß ist vorgesehen, dass die Auflagefläche 30 auf einem um eine gehäusefeste Drehachse 26 drehbaren Drehteller 24 angeordnet ist, der zwischen dem Gehäuseunterteil 14 und der Abdeckhaube 16 angeordnet ist und seitlich über die Abdeckhaube 16 hervorsteht und zwischen einer Beschriftungsposition, in der die Auflagefläche 30 vollständig von der Abdeckhaube 16 überdeckt wird, und einer Beladeposition, in der sich die Auflagefläche 30 vollständig außerhalb der Abdeckhaube 16 befindet, beweglich ist, und dass der Drehteller 24 zwei sich radial von der Drehachse 26 erstreckende, aus der Auflagefläche 30 vorstehende Abdichtrippen 36, 38 aufweist, die in der Beschriftungsposition an einer Vorderwand 42 der Abdeckhaube 16 anliegen.

## Patentansprüche

1. Vorrichtung zur Beschriftung von Kennzeichnungsschildern mit einer Auflagefläche (30) für die Kennzeichnungsschilder, mit einem Laserbeschriftungsgerät und mit einem Gehäuse (12) zum Einschließen eines aus dem Laserbeschriftungsgerät austretenden, auf die Auflagefläche (30) gerichteten Laserstrahls, wobei das Gehäuse (12) ein Gehäuseunterteil (14) und eine auf oder über dem Gehäuseunterteil (14) angeordnete Abdeckhaube (16) aufweist, **dadurch gekennzeichnet, dass** die Auflagefläche (30) auf einem um eine gehäusefeste Drehachse (26) drehbaren Drehteller (24) angeordnet ist, der zwischen dem Gehäuseunterteil (14) und der Abdeckhaube (16) angeordnet ist und seitlich über die Abdeckhaube (16) hervorsteht und zwischen einer Beschriftungsposition, in der die Auflagefläche (30) vollständig von der Abdeckhaube (16) überdeckt wird, und einer Beladeposition, in der sich die Auflagefläche (30) vollständig außerhalb der Abdeckhaube (16) befindet, beweglich ist, und dass der Drehteller (24) zwei sich radial von der Drehachse (26) erstreckende, aus der Auflagefläche (30) vorstehende Abdichtrippen (36, 38) aufweist, die in der Beschriftungsposition an einer Vorderwand (42) der Abdeckhaube (16) anliegen.

2. Vorrichtung nach Anspruch 1, **dadurch gekennzeichnet, dass** die Abdichtrippen (36, 38) jeweils einen ersten Abschnitt (40) zum Untergreifen einer Unterkante (44) der Vorderwand (42) und einen sich vom ersten Abschnitt (40) nach oben erstreckenden zweiten Abschnitt (46) zur Anlage an der Vorderwand (42) aufweisen.

3. Vorrichtung nach Anspruch 2, **dadurch gekennzeichnet, dass** jeder der ersten Abschnitte (40) in der Beschriftungsposition an der Unterkante (44) der Vorderwand (42) anliegt.

4. Vorrichtung nach einem der vorangehenden Ansprüche, **dadurch gekennzeichnet, dass** in der Beschriftungsposition eine erste der Abdichtrippen (36) an der dem Laserstrahl zugewandten Innenseite der Vorderwand (42) anliegt, während die zweite der Abdichtrippen (38) an der dem Laserstrahl abgewandten Außenseite der Vorderwand (42) anliegt.

5. Vorrichtung nach einem der vorangehenden Ansprüche, **dadurch gekennzeichnet, dass** die Abdichtrippen (36, 38) auch in der Beladeposition an der Vorderwand (42) anliegen und dass der Drehteller (24) eine weitere Auflagefläche (32) für die Kennzeichnungsschilder aufweist, wobei die Abdichtrippen (36, 38) zwischen den beiden Auflageflächen (30, 32) angeordnet sind.

6. Vorrichtung nach Anspruch 4 und Anspruch 5, **dadurch gekennzeichnet, dass** in der Beladeposition die erste Abdichtrippe (36) an der Innenseite der Vorderwand (42) und die zweite Abdichtrippe (38) an der Außenseite der Vorderwand (42) anliegt.

7. Vorrichtung nach Anspruch 5 oder 6, **dadurch gekennzeichnet, dass** die Abdichtrippen (36, 38) jeweils einen weiteren Abschnitt (50) zum Untergreifen der Unterkante (44) der Vorderwand (42) in der Beladeposition aufweisen.

8. Vorrichtung nach einem der Ansprüche 2 bis 7, **dadurch gekennzeichnet, dass** die Abschnitte (40, 50) zum Untergreifen der Unterkante (44) der Vorderwand (42) jeweils eine Stufe (58) aufweisen, so dass ihre Höhe zum freien Ende (56) der Abdichtrippen (36, 38) hin verringert ist.

9. Vorrichtung nach einem der vorangehenden Ansprüche, **dadurch gekennzeichnet, dass** die Abdeckhaube (16) aus mehreren Blechen (52) zusammengesetzt ist, die zumindest teilweise an mindestens einer ihrer Seitenkanten jeweils einen umgebogenen Seitenstreifen (54) aufweisen, der flächig am benachbarten Blech (52) anliegt.

10. Vorrichtung nach einem der Ansprüche 2 bis 9, **dadurch gekennzeichnet, dass** sich die zweiten Abschnitte (46) von der Drehachse (26) ausgehend zu den freien Enden (56) der Abdichtrippen (36, 38) hin kontinuierlich verbreitern.

11. Vorrichtung nach einem der vorangehenden Ansprüche, **dadurch gekennzeichnet, dass** die Auflagefläche (30) bzw. die Auflageflächen (30, 32) mit einer Vertiefung (34) versehen ist bzw. sind, deren Kontur der Kontur eines Kennzeichnungsschildersatzes entspricht.

## Claims

1. Apparatus for inscription of marking tags, having a supporting surface (30) for the marking tags, having a laser inscription device, and having a housing (12) for enclosing a laser beam that exits from the laser inscription device, directed at the supporting surface (30), wherein the housing (12) has a lower housing part (14) and a covering hood (16) disposed on or above the lower housing part (14), **characterized in that** the supporting surface (30) is disposed on a turntable (24) that can rotate about an axis of rotation (26) fixed in place in the housing, which turntable is disposed between the lower housing part (14) and the covering hood (16), and projects laterally beyond the covering hood (16), and can be moved between an inscription position in which the supporting surface (30) is completely covered by the covering hood (16), and a loading position in which the supporting surface (30) is situated entirely outside of the covering hood (16), and that the turntable (24) has two sealing ribs (36, 38) that extend radially from the axis of rotation (26), projecting out of the supporting surface (30), which ribs lie against a front wall (42) of the covering hood (16) in the inscription position.

2. Apparatus according to claim 1, **characterized in that** the sealing ribs (36, 38) each have a first section (40) for engaging under a lower edge (44) of the front wall (42) and a second section (46) that extends upward from the first section (40), for lying against the front wall (42).

3. Apparatus according to claim 2, **characterized in that** each of the first sections (40) lies against the lower edge (44) of the front wall (42) in the inscription position.

4. Apparatus according to one of the preceding claims, **characterized in that** in the inscription position, a first one of the sealing ribs (36) lies against the inside of the front wall (42) that faces the laser beam, while the second of the sealing ribs (38) lies against the outside of the front wall (42) that faces away from the laser beam.

5. Apparatus according to one of the preceding claims, **characterized in that** the sealing ribs (36, 38) lie against the front wall (42) in the loading position, as well, and that the turntable (24) has a further supporting surface (32) for the marking tags, wherein the sealing ribs (36, 38) are disposed between the two supporting surfaces (30, 32).

6. Apparatus according to claim 4 and claim 5, **characterized in that** in the loading position, the first sealing rib (36) lies against the inside of the front wall (42) and the second sealing rib (38) lies against the outside of the front wall (42).

7. Apparatus according to claim 5 or 6, **characterized in that** the sealing ribs (36, 38) each have a further section (50) for engaging under the lower edge (44) of the front wall (42) in the loading position.

8. Apparatus according to one of claims 2 to 7, **characterized in that** the sections (40, 50) for engaging under the lower edge (44) of the front wall (42) each have a step (58), so that their height is reduced toward the free end (56) of the sealing ribs (36, 38).

9. Apparatus according to one of the preceding claims, **characterized in that** the covering hood (16) is composed of multiple metal sheets (52) that have a bent side strip (54), in each instance, at least in part, on at least one of their side edges, which strip lies against the adjacent metal sheet (52) with its full area.

10. Apparatus according to one of claims 2 to 9, **characterized in that** the second sections (46) widen continuously, proceeding from the axis of rotation (26) to the free ends (56) of the sealing ribs (36, 38).

11. Apparatus according to one of the preceding claims, **characterized in that** the supporting surface (30) or the supporting surfaces (30, 32) is/are provided with a depression (34), the contour of which corresponds to the contour of a set of marking tags.

## Revendications

1. Dispositif dévolu au marquage de plaques d'identification, comprenant une surface d'appui (30) dédiée auxdites plaques d'identification, un appareil de marquage au laser et un boîtier (12) affecté au confinement d'un rayonnement laser sortant dudit appareil de marquage au laser et dirigé vers ladite surface d'appui (30), ledit boîtier (12) comportant une partie inférieure (14) et un capot de recouvrement (16) placé sur ladite partie inférieure (14) du boîtier, ou au-dessus de celle-ci, **caractérisé par le fait que** la surface d'appui (30) se trouve sur un plateau rotatif (24) qui peut tourner autour d'un axe de rotation (26) faisant corps avec le boîtier, est interposé entre la partie inférieure (14) dudit boîtier et le capot de recouvrement (16), fait saillie latéralement au-delà dudit capot de recouvrement (16) et est mobile entre un emplacement de marquage, auquel la surface d'appui (30) est intégralement coiffée par le capot de recouvrement (16), et un emplacement de chargement auquel ladite surface d'appui (30) est située intégralement à l'extérieur dudit capot de recouvrement (16) ; et **par le fait que** le plateau rotatif (24) présente deux nervures d'étanchement (36, 38) qui s'étendent radialement à partir de l'axe de rotation (26), dépassent au-delà de la surface d'appui (30) et sont en applique, à l'emplacement de marquage, contre une paroi antérieure (42) du capot de recouvrement (16).

2. Dispositif selon la revendication 1, **caractérisé par le fait que** les nervures d'étanchement (36, 38) comprennent, à chaque fois, une première région (40) conçue pour venir en prise par-dessous avec une arête inférieure (44) de la paroi antérieure (42), et une deuxième région (46) s'étendant vers le haut à partir de ladite première région (40), et conçue pour venir en applique contre ladite paroi antérieure (42).

3. Dispositif selon la revendication 2, **caractérisé par le fait que** chacune des premières régions (40) est en applique, à l'emplacement de marquage, contre l'arête inférieure (44) de la paroi antérieure (42).

4. Dispositif selon l'une des revendications précédentes, **caractérisé par le fait qu'**à l'emplacement de marquage, une première nervure (36), parmi les nervures d'étanchement, est en applique contre la face intérieure de la paroi antérieure (42) qui pointe vers le rayonnement laser, tandis que la seconde (38) desdites nervures d'étanchement est en applique contre la face extérieure de ladite paroi antérieure (42) qui est tournée à l'opposé dudit rayonnement laser.

5. Dispositif selon l'une des revendications précédentes, **caractérisé par le fait qu'**à l'emplacement de chargement également, les nervures d'étanchement (36, 38) sont en applique contre la paroi antérieure (42) ; et **par le fait que** le plateau rotatif (24) est muni d'une surface d'appui (32) supplémentaire, dédiée aux plaques d'identification, lesdites nervures d'étanchement (36, 38) étant interposées entre les deux surfaces d'appui (30, 32).

6. Dispositif selon la revendication 4 et la revendication 5, **caractérisé par le fait qu'**à l'emplacement de chargement, la première nervure d'étanchement (36) est en applique contre la face intérieure de la paroi antérieure (42) et la seconde nervure d'étanchement (38) est en applique contre la face extérieure de ladite paroi antérieure (42).

7. Dispositif selon la revendication 5 ou 6, **caractérisé par le fait que** les nervures d'étanchement (36, 38) sont pourvues, à chaque fois, d'une région supplémentaire (50) conçue pour venir en prise par-dessous, à l'emplacement de chargement, avec l'arête inférieure (44) de la paroi antérieure (42).

8. Dispositif selon l'une des revendications 2 à 7, **caractérisé par le fait que** les régions (40, 50), destinées à la venue en prise par-dessous avec l'arête inférieure (44) de la paroi antérieure (42), sont respectivement munies d'un gradin (58), leur hauteur s'en trouvant ainsi réduite en direction de l'extrémité libre (56) des nervures d'étanchement (36, 38).

9. Dispositif selon l'une des revendications précédentes, **caractérisé par le fait que** le capot de recouvrement (16) est composé de plusieurs tôles (52) munies au moins en partie, sur au moins l'une de leurs arêtes latérales, d'une bande latérale coudée respective (54) portant à plat contre la tôle (52) voisine.

10. Dispositif selon l'une des revendications 2 à 9, **caractérisé par le fait que** les deuxièmes régions (46) s'élargissent continûment, à partir de l'axe de rotation (26), en direction des extrémités libres (56) des nervures d'étanchement (36, 38).

11. Dispositif selon l'une des revendications précédentes, **caractérisé par le fait que** la surface d'appui (30) ou, respectivement, les surfaces d'appui (30, 32) comporte(nt) un renfoncement (34) dont le profil correspond au profil d'un jeu de plaques d'identification.
